# EUROPEAN PATENT SPECIFICATION

(11) **EP 2 767 655 B1**
(45) Date of publication and mention of the grant of the patent: **31.01.2018**
(21) Application number: 14155109.3
(22) Date of filing: 13.02.2014
(51) Int. Cl.: E04H 15/08

(54) **A portal in combination with an awning for vehicles**
Ein Portal in Kombination mit einem Vorzelt für Fahrzeuge
Un portail en combinaison avec un auvent pour véhicules

(30) Priority: 14.02.2013 GB 201302615
(43) Date of publication of application: 20.08.2014
(73) Proprietor: Lunar Caravans Ltd, Preston, Lancashire PR5 5JF (GB)
(72) Inventor: Mellor, Darryl, Preston, Lancashire PR5 5JF (GB); Mellor, Brian, Preston, Lancashire PR5 5JF (GB)
(74) Representative: Hutchinson, Thomas Owen

(56) References cited:
- DE-U1-202008 011 521
- FR-A1- 2 283 796
- FR-A1- 2 323 548
- FR-A1- 2 458 425
- FR-A1- 2 898 928
- FR-A5- 2 165 291

## Description

This invention relates to a portal in conjunction with an awning and in particular, but without limitation, to awnings suitable for use in conjunction with motor vehicles.

Awnings generally comprise a support frame over which a canvas is draped, or from which a canvas is suspended. Awnings are often used to provide temporary accommodation, for example, during a stay at a camp site. More often than not, in such situations, the users of the awning travel to the camp site in a vehicle, such as a motor car, but often in a campervan or motorhome (hereinafter, "a vehicle"). When used in conjunction with vehicles, awnings can provide useful additional accommodation, especially if the vehicle is relatively small, or when used for extended stays on site.

Awnings are typically self-contained structures, and are usually accessed via a doorway.

Caravan awnings per se are known, in particular: FR 2458425 A1 describes an awning connectable to a caravan that is convertible to a canopy, comprising two accessories, one of which is a porch canvas with a roof and side wall; and the other is an outer frame with a roof overhang.;

FR 2165291 A5 describes a caravan awning wherein the outer wall comprises a large opening, closable by means of a canvas panel; FR 2283796 A1 describes a caravan awning wherein the front and side panels comprise openings to accommodate closable windows and doors; FR 2 323 548 A1 is a canopy accessory that may be used in combination with a caravan and/ or an awning wherein, the canopy comprises a roll of canvas which can be unravelled to create a porch- like structure connected to the caravan/ awning; DE 20 2008 011521 U1 describes a retractable awning comprising a roof and at least one side wall that can be attached or detached; and FR 2898928 A1 describes a self-supportive tent comprising a closable aperture, that can be connected to a vehicle by way of a connecting appendage, in which the connecting appendage is adhered to the vehicle via suction cups and provides a passageway between the tent and vehicle.

Where the awning is being used to extend the accommodation provided by a vehicle, it is necessary to walk in the open when moving between the vehicle and the awning, which can be inconvenient, especially in bad weather. In addition, having a separate awning and vehicle can impair the privacy of the occupants because there is no continuity between the interior of the vehicle and the interior of the awning, which can be undesirable. The invention therefore aims to provide a solution to this problem and/or to provide a greater degree of integration between a vehicle, such as a campervan or motorhome, and an awning. The object of the present invention is solved by the technical features of a portal in conjunction with an awning according to claim 1. Various aspects of the invention are set forth in the appendent claims.

The roof and side walls of the portal suitably terminate remotely from the entrance aperture at a peripheral edge, and the fixing means are suitably disposed at or near to the peripheral edge.

The fixing means suitably comprises one or more magnets affixable, in use, to the metal bodywork of the said vehicle. Additionally or alternatively, the fixing means may comprise one or more suction cups affixable, in use, to the bodywork or glazing panels of the said vehicle. The fixing means may be continuous, for example, comprising a strip of magnetic vinyl sewn into an edge seam of the portal, or it may comprise discrete fixing means, for example, spaced-apart suction cups, or spaced-apart magnetic discs affixed to the portal.

To avoid damaging the vehicle, the portal suitably comprises a soft or non-abrasive surface in regions where it contacts the vehicle.

One or more seals are suitably provided for forming a weather tight, windproof and/or waterproof seal between the portal and the vehicle. The seal or seals, where provided, may comprise a resiliently deformable strip, such as an elastomeric/polymeric sealing strip or tube extending at least partially around the portal.

The portal is suitably manufactured of a flexible material, such as cloth, canvas, vinyl or woven polymer sheeting. Such a configuration enables the vehicle to move relative to the awning and still be able to "dock" therewith, which is an important consideration when the vehicle is driven away, for example, and repositioned at a later time.

The portal may be tapered such that an end leading to the entrance aperture of the awning is of a first shape and size whilst the other end, which connects to the vehicle, in use, is of a second shape and size.

The portal is suitably detachable from the awning, for example, using a zip fastener, hook and loop connector webs, or by any other suitable means. By enabling the portal to be detachable from the awning, it may be possible to change the portal to fit different types of vehicles.

The portal is suitably configured to provide a connection between the interior of the awning and the interior of a vehicle, such as a motor home, caravan or campervan. The portal may connect to any part of the vehicle, although it is often convenient for it to connect around the periphery of a doorway of the vehicle, such as its tailgate or side door.

A closure is suitably provided for closing the portal when the vehicle is not present. A closure may, for example, take the form of a fabric doorway that can be zipped closed when the vehicle is not present, and/or when users wish to close off the connection between the vehicle and the awning.

The awning is suitably modular, comprising a first "room" leading from the portal. However, additional awning components could be added to the first "room" to enlarge and/or configure the accommodation for different purposes. The rooms may be of different types, shapes and or sizes. A canopy may also be affixable to the awning to provide an open veranda area.

Preferred embodiments of the invention shall now be described, by way of example only, with reference to the accompanying drawings in which:
Figure 1 is a perspective view of an awning-vehicle combination according to the invention;
Figure 2 is a perspective view of the awning of Figure 1 showing the portal;
Figure 3 is a plan view of the portal of Figure 2, showing two different connection methods to a vehicle;
Figure 4 is a schematic cross-section showing a first embodiment of a fixing means for the portal of Figures 1 to 3;
Figure 5 is a schematic cross-section showing a second embodiment of a fixing means for the portal of Figures 1 to 3; and
Figure 6 is a perspective view of an extended awning-vehicle combination according to the invention.

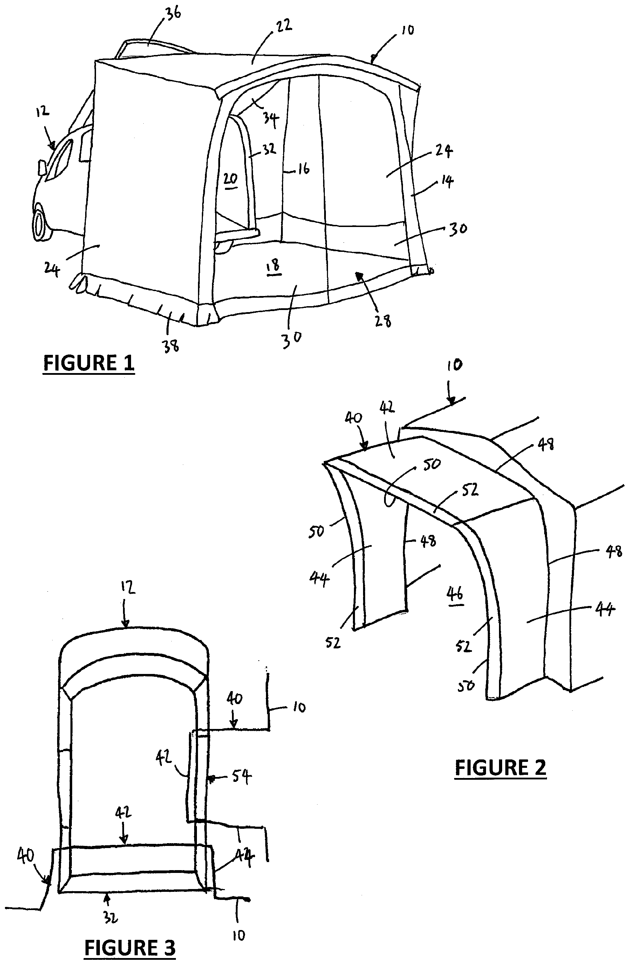

In Figure 1, an awning 10 is detachably affixable to a vehicle 12 via a detachable portal (not visible). The awning 10 comprises a main body portion formed from a canvas 14 that is supported by a support frame 16 that is erected under the canvas 14. The canvas provides an interior volume that can be used as a room 18 to supplement the interior space 20 of the vehicle 12, in the illustrated example, a small campervan. The room 18 is defined by a curved roof 22 and two side walls 24. Access to the interior of the awning 10 is either via an entrance doorway 28, formed from a pair of zip-closable flaps 30 arranged to close a main entrance aperture, or via the vehicle, which, in the illustrated embodiment, has been reversed so that its tail end 32 protrudes slightly into the room 18. The vehicle's tail gate 34 has been raised to allow users to pass freely from the interior of the vehicle 12 to the interior of the awning 10, and vice-versa, without having to go outside. The vehicle 12 additionally comprises a raising roof 36 so that occupants of the vehicle 12 are able to stand inside.

The awning has a weighted, flexible skirt 38 that lies on the ground to inhibit wind and rain from entering the room 18.

A portal 40, as shown in Figure 2, extends from the awning 10 and comprises a roof portion 42 and side wall portions 44 that extend away from the main body of the awning 10. The portal 40 is detachably affixable around an opening 46 in the awning 10 via a weather tight zip fastener 48 such that it can be interchanged with other portals 40 to fit different vehicles 12 or awnings 10, as desired.

The roof and side walls 42, 44 of the portal 40 terminate in peripheral edges 50 that comprise a fixing means 52 for detachably fixing the peripheral edges 50 the external bodywork of the vehicle 12. The fixing means 52 are described in greater detail below.

In Figure 3, it can be seen how the portal 40 can be configured to affix around the tail end 32 of a vehicle 12, for example, as shown in Figure 1, or around a side door 54 of the vehicle 12. As can be seen in Figure 2, the portal's roof portion 42 projects beyond the peripheries of the side wall portions 44 so as to overlie the vehicle's roof, thereby inhibiting ingress of water into the interior of the vehicle 12.

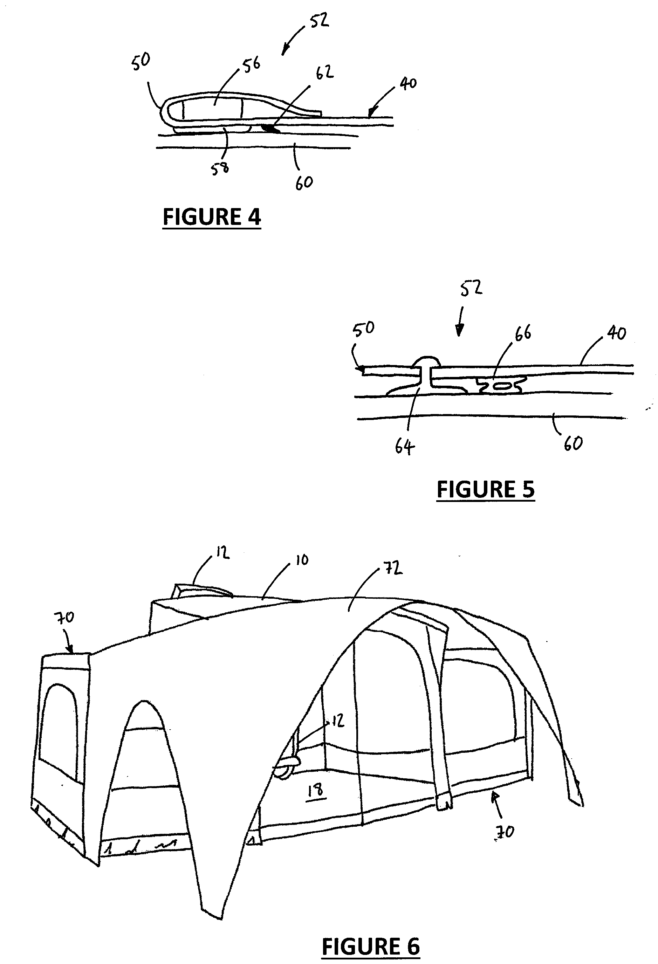

Two possible embodiments of the fixing means 52 are shown in Figures 4 and 5. In Figure 4, the peripheral edge 50 of the portal 40 comprises a seam, into which a magnetic strip 56 has been sewn. The interior edge of the peripheral edge 50 is provided with a soft, felt lining strip 58, which serves to cushion the peripheral edge 50 from the vehicle's bodywork 60 to prevent scratching thereof, in use. The magnetic strip is attracted to the vehicle's metal bodywork 60 and releasably affixes the portal 40 to the vehicle 12 using magnetic force. A resiliently deformable rubber sealing strip 62 runs parallel to the felt strip 58 to provide a weather tight seal against the elements when the portal is affixed to the vehicle.

In Figure 5, the magnetic strip described previously has been replaced by a number of spaced-apart suction cups 64 that are able to releasably stick to the vehicle's bodywork 60 by suction. The suction cups 64 are useful where there are no metal parts available on the vehicle to which the portal may be connected, for example, if the peripheral edge 50 of the portal 40 overlies a window or plastics body panel. The sealing strip 66 shown in Figure 5 comprises a hollow rubber tube that can be compressed against the vehicle's bodywork 60 to form a seal.

It is envisaged that the portal will be specially adapted to "fit" different vehicles, and so a combination of magnetic strips, individual magnets, and suction cups may be provided, as necessary.

Figure 6 shows the awning 10 of Figure 1, but with additional modules attached thereto, in this case, side rooms 70 and a canopy 72. The awning 10 is suitably modular, which enables it to be readily configured to meet different site constraints, e.g. varying shapes and sizes of pitches. In that connection, it is useful for the portal 40 to be detachable from the awning 10, so that, say, a "side door" portal and a "tail gate" portal can be taken to the site to allow a greater number of configuration options when users arrive on site.

## Claims

1. A portal (40), in conjunction with an awning (10), the portal (40) comprising a roof (22) and side walls (24) and further comprising: fixing means (52) operatively affixable, in use, to a vehicle (12) located at least partially within the portal (40), the awning (10) comprises: a support frame (16); a canvas (14) supported by the support frame (16); a closeable entrance aperture (20) in the canvas (14) providing access to the interior of the canvas (14); the portal (40) surrounding the entrance aperture (20), said portal (40), roof (22) and side walls (24) extending away from the entrance aperture (20) and further comprising a fabric doorway (28) that can be zipped closed for closing the portal (40) when the vehicle (12) is not present and/or when users wish to close off the connection between the vehicle (12) and the awning (10), **characterised in that** the portal further comprises a resiliently deformable elastomeric/polymeric sealing strip or tube extending at least partially around the portal, adapted, in use, to form a weather tight, windproof and/or waterproof seal between the portal (40) and the vehicle (12).

2. The portal (40) of claim 1, wherein the roof (22) and side walls (24) of the portal (40) terminate remotely from the entrance aperture at a peripheral edge (50), and the fixing means (52) are disposed at or near to the peripheral edge (50).

3. The portal (40) of claim 1 or claim 2, wherein the fixing means (52) comprise one or more magnets affixable, in use, to the metal bodywork of the said vehicle (12).

4. The portal (40) of claim 3, wherein the fixing means (52) is continuous and comprises a strip of magnetic vinyl (56) sewn into an edge seam of the portal (40).

5. The portal of claim 3, wherein the fixing means (52) comprises discrete fixing means being spaced-apart magnetic discs affixed to the portal (40).

6. The portal (40) of claim 1 or claim 2, wherein the fixing means (52) comprise one or more suction cups (64) affixable, in use, to the bodywork or glazing panels of the said vehicle (12).

7. The portal (40) of claim 6, wherein the fixing means (52) comprises discrete fixing means being spaced-apart suction cups (64).

8. The portal (40) of any preceding claim, comprising a soft, non-abrasive surface in regions (58) where it contacts the vehicle.

9. The portal (40) of any preceding claim, manufactured of any one or more of the group comprising: cloth, canvas, vinyl and woven polymer sheeting.

10. The portal (40) of any preceding claim, wherein the portal (40) is tapered such that an end leading to the entrance aperture (20) of the awning is of a first shape and size whilst the other end, which connects to the vehicle (12), in use, is of a second shape and size.

11. The portal (40) of any preceding claim, wherein the portal (40) is detachable from the awning by any one or more of the group comprising: a zip fastener (48); and hook and loop connector webs.

12. The portal (40) of any preceding claim, wherein the awning (10) is modular, comprising a first "room" leading from the portal (40).

13. The portal (40) of claim 12, further comprising additional awning components which can be added to the room to enlarge the accommodation provided thereby.

## Patentansprüche

1. Portal (40) in Verbindung mit einem Vorzelt (10), wobei das Portal (40) ein Dach (22) und Seitenwände (24) und ferner Befestigungsmittel (52) umfasst, die beim Gebrauch operativ an einem Fahrzeug (12) befestigt werden können, das sich wenigstens teilweise in dem Portal (40) befindet, wobei das Vorzelt (10) Folgendes umfasst: einen Tragrahmen (16); eine vom Tragrahmen (16) getragene Leinwand (14); eine verschließbare Eingangsöffnung (20) in der Leinwand (14), die Zugang zum Innern der Leinwand (14) bietet; wobei das Portal (40) die Eingangsöffnung (20) umgibt, wobei das genannte Portal (40), das Dach (22) und die Seitenwände (24) von der Eingangsöffnung (20) weg verlaufen, und ferner eine Stofftür (28) umfasst, die mit einem Reißverschluss verschlossen werden kann, um das Portal (40) zu verschließen, wenn das Fahrzeug (12) nicht anwesend ist und/oder wenn Benutzer die Verbindung zwischen Fahrzeug (12) und Vorzelt (10) verschließen möchten, **dadurch gekennzeichnet, dass** das Portal ferner eine(n) elastisch verformbare(n) elastomere(n)/polymere(n) Verschlussstreifen oder-röhre umfasst, der/die wenigstens teilweise um das Portal verläuft, beim Gebrauch ausgelegt zum Bilden einer wetterdichten, winddichten und/oder wasserdichten Abdichtung zwischen dem Portal (4) und dem Fahrzeug (12).

2. Portal (40) nach Anspruch 1, wobei das Dach (22) und die Seitenwände (24) des Portals (40) fern von der Eingangsöffnung an einem peripheren Rand (50) enden und die Befestigungsmittel (52) an oder nahe dem peripheren Rand (50) angeordnet sind.

3. Portal (40) nach Anspruch 1 oder Anspruch 2, wobei die Befestigungsmittel (52) ein oder mehrere Magnete umfassen, die beim Gebrauch an der Metallkarosserie des genannten Fahrzeugs (12) befestigt werden können.

4. Portal (40) nach Anspruch 3, wobei das Befestigungsmittel (52) kontinuierlich ist und einen Streifen aus magnetischem Vinyl (56) umfasst, der in eine Randnaht des Portals (40) genäht ist.

5. Portal nach Anspruch 3, wobei das Befestigungsmittel (52) diskrete Befestigungsmittel umfasst, die beabstandete Magnetscheiben sind, die an dem Portal (40) befestigt sind.

6. Portal (40) nach Anspruch 1 oder Anspruch 2, wobei die Befestigungsmittel (52) einen oder mehrere Saugnäpfe (64) umfassen, die beim Gebrauch an der Karosserie oder am Fenster des genannten Fahrzeugs (12) befestigt werden können.

7. Portal (40) nach Anspruch 6, wobei das Befestigungsmittel (52) diskrete Befestigungsmittel umfasst, die beabstandete Saugnäpfe (64) sind.

8. Portal (40) nach einem vorherigen Anspruch, das eine weiche, abriebfreie Fläche in Regionen (58) umfasst, in denen es das Fahrzeug berührt.

9. Portal (40) nach einem vorherigen Anspruch, hergestellt durch ein oder mehrere aus der Gruppe bestehend aus Tuch, Leinwand, Vinyl und gewebter Polymerbahn.

10. Portal (40) nach einem vorherigen Anspruch, wobei das Portal (40) konisch zuläuft, so dass ein zur Eintrittsöffnung (20) des Vorzelts führendes Ende eine erste Form und Größe hat, während das andere Ende, das beim Gebrauch mit dem Fahrzeug (12) verbunden ist, eine zweite Form und Größe hat.

11. Portal (40) nach einem vorherigen Anspruch, wobei das Portal (40) vom Vorzelt durch eines oder mehrere aus der Gruppe bestehend aus einem Reißverschlussbefestigungsmittel (48) sowie Klettverschlussverbindungsbändern abnehmbar ist.

12. Portal (40) nach einem vorherigen Anspruch, wobei das Vorzelt (10) modular ist und einen ersten von dem Portal (40) ausgehenden "Raum" umfasst.

13. Portal (40) nach Anspruch 12, das ferner zusätzliche Vorzeltkomponenten umfasst, die dem Raum hinzugefügt werden, um den dadurch erzielten Raum zu vergrößern.

## Revendications

1. L'invention concerne une entrée (40) en conjonction avec une marquise (10), l'entrée (40) comprenant un toit (22) et des parois latérales (24), et comprenant par ailleurs : des moyens de fixation (52) pouvant être fixés fonctionnellement, en cas d'utilisation, à un véhicule (12) se trouvant au moins partiellement dans l'entrée (40), la marquise (10) comprenant : un cadre de support (16) ; une toile (14) soutenue par le cadre de support (16) ; une ouverture d'entrée (20) pouvant être fermée, formée dans la toile (14), permettant d'accéder à l'intérieur de la toile (14) ; l'entrée (40) entourant l'ouverture d'entrée (20), lesdits entrée (40), toit (22) et parois latérales (24) s'étendant en s'éloignant de l'ouverture d'entrée (20) et comprenant par ailleurs une baie de communication en tissu (28) pouvant être fermée à l'aide d'une fermeture éclair pour fermer l'entrée (40) lorsque le véhicule (12) n'est pas présent et/ou lorsque les utilisateurs souhaitent fermer la connexion entre le véhicule (12) et la marquise (10), **caractérisé en ce que** l'entrée comprend par ailleurs un tube ou bande de scellement élastiquement déformable en élastomère/polymère s'étendant au moins partiellement autour de l'entrée adapté, en cas d'utilisation, pour former un joint étanche aux intempéries, au vent et/ou à l'eau entre l'entrée (40) et le véhicule (12).

2. L'entrée (40) selon la revendication 1, dans laquelle le toit (22) et les parois latérales (24) de l'entrée (40) se terminent à distance de l'ouverture d'entrée et sur un bord périphérique (50) et les moyens de fixation (52) sont disposés sur ou à proximité du bord périphérique (50).

3. L'entrée (40) selon les revendications 1 ou 2, dans laquelle les moyens de fixation (52) comprennent un ou plusieurs aimants pouvant être fixés, en cas d'utilisation, à la carrosserie métallique dudit véhicule (12).

4. L'entrée (40) selon la revendication 3, dans laquelle les moyens de fixation (52) sont continus et comprennent une bande de vinyle magnétique (56) cousue dans un joint de bord de l'entrée (40).

5. L'entrée selon la revendication 3, dans laquelle les moyens de fixation (52) comprennent des moyens de fixation discrets consistant en des disques magnétiques espacés les uns des autres, fixés à l'entrée (40).

6. L'entrée (40) selon la revendication 1 ou 2, dans laquelle les moyens de fixation (52) comprennent une ou plusieurs ventouses (64) pouvant être fixées, en cas d'utilisation, à la carrosserie métallique ou aux panneaux de vitrage dudit véhicule (12).

7. L'entrée (40) selon la revendication 6, dans laquelle les moyens de fixation (52) comprennent des moyens de fixation discrets consistant en des ventouses (64) espacées les unes des autres.

8. L'entrée (40) selon l'une des revendications précédentes, comprenant des surfaces douces et non abrasives dans les zones (58) dans lesquelles elle entre en contact avec le véhicule.

9. L'entrée (40) selon l'une des revendications précédentes, fabriquée à l'aide d'un ou plusieurs éléments faisant partie du groupe comprenant : du tissu, de la toile, du vinyle et des feuilles de polymère tissées.

10. L'entrée (40) selon l'une des revendications précédentes, dans laquelle l'entrée (40) présente une forme conique de façon à ce qu'une extrémité menant à l'ouverture d'entrée (20) de la marquise dispose d'une première forme et taille et l'autre extrémité, se connectant au véhicule (12) dispose, en cas d'utilisation, d'une seconde forme et taille.

11. L'entrée (40) selon l'une des revendications précédentes, dans laquelle l'entrée (40) peut être détachée de la marquise par l'un ou plusieurs des éléments appartenant au groupe comprenant : une fermeture éclair (48) ; et une bande de connexion à fermeture velcro.

12. L'entrée (40) selon l'une des revendications précédentes, dans laquelle la marquise (10) est modulaire, comprenant une première « pièce » menant à l'entrée (40).

13. L'entrée (40) selon la revendication 12, comprenant par ailleurs des composants de marquise supplémentaires pouvant être ajoutés à la pièce pour agrandir l'espace d'hébergement fourni par cette dernière.
